(19) Europäisches Patentamt / European Patent Office / Office européen des brevets

(11) **EP 2 337 277 B1**

(12) **EUROPEAN PATENT SPECIFICATION**

(45) Date of publication and mention
of the grant of the patent:
**21.10.2015 Bulletin 2015/43**

(51) Int Cl.:
*H04L 12/707* *(2013.01)*      *H04L 12/753* *(2013.01)*
*H04L 12/757* *(2013.01)*      *H04L 12/703* *(2013.01)*

(21) Application number: **09290965.4**

(22) Date of filing: **18.12.2009**

(54) **Network node for a streaming tree network and method of operating a network node for a streaming tree network**

Netzwerkknoten für ein Streaming-Baumnetzwerk und Betriebsverfahren eines Netzwerkknotens für ein Streaming-Baumnetzwerk

Noeud pour un réseau en arbre pour le streaming et procédé de fonctionnement d'un noeud pour réseau en arbre pour le streaming

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**22.06.2011 Bulletin 2011/25**

(73) Proprietor: **ALCATEL LUCENT**
**92100 Boulogne-Billancourt (FR)**

(72) Inventors:
• **Strauss, Thomas**
**73734 Esslingen (DE)**
• **Bendler, Johannes**
**79106 Freiburg (DE)**

(74) Representative: **Wetzel, Emmanuelle et al**
**Alcatel-Lucent Deutschland AG**
**Intellectual Property & Standards**
**70430 Stuttgart (DE)**

(56) References cited:
**US-A1- 2003 126 299**

• SILBER J ET AL: "Augmenting overlay trees for failure resiliency" GLOBAL TELECOMMUNICATIONS CONFERENCE, 2004. GLOBECOM '04. IEEE DALLAS, TX, USA 29 NOV.- 3 DEC., 2004, PISCATAWAY, NJ, USA,IEEE, PISCATAWAY, NJ, USA, vol. 3, 29 November 2004 (2004-11-29), pages 1525-1531, XP010757778 ISBN: 978-0-7803-8794-2
• GUIKAI LIU ET AL: "Dynamic Maintenance for Multicast Source Tree in Wireless Ad Hoc Networks" WIRELESS COMMUNICATIONS, NETWORKING AND MOBILE COMPUTING, 2009. WICOM '09. 5TH INTERNATIONAL CONFERENCE ON, IEEE, PISCATAWAY, NJ, USA, 24 September 2009 (2009-09-24), pages 1-5, XP031554159 ISBN: 978-1-4244-3692-7

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of the Invention

The invention relates to a network node for a streaming tree network and a method of operating a network node for a streaming tree network.

Background

Streaming tree networks comprise a plurality of network nodes that are arranged in a logical tree-like topology which comprises a plurality of levels. The logical tree-like topology may e.g. be established independent of an actual underlying physical network infrastructure such as the Internet. A plurality of different data streams may be distributed by means of such streaming tree networks to a plurality of consumers.

Streaming trees suffer from the disadvantage that child nodes are losing their connection to the remaining network, if an upper level node such as a parent node fails or explicitly leaves the tree.

Hence there is a need for timely recovering tree connectivity, because a large subsection of the tree network may b= affected by a link failure. It is desirable to minimize stream interruption time.

US 2003/0126295 A1 discloses a hierarchical tree-based protection scheme for mesh networks.

Summary

The object of the present invention is achieved by a network node according to claim 1 and a method according to claim 12.

According to an advantageous embodiment, said local backup information comprises information on one or more network nodes having the same parent node as the network node which enables the network node to efficiently select one of its siblings as a backup node.

According to a further embodiment, said local backup information comprises information on one or more sibling network nodes of said parent node, i.e. the network node locally maintains backup information on its own aunt and uncle nodes as potential backup parent nodes.

According to the aforedescribed embodiments, the network node may thus use its own siblings and/or the siblings of its parent node for backup purposes.

According to a further embodiment, said local backup information comprises information on which of said plurality of network nodes is configured to operate as a potential backup node and/or a fan-out and/or a number of free slots and/or a sort key of the respective node.

A node's fan-out value is usually provided by the respective node itself and describes how many child nodes it may take to be filled up to capacity. The amount of free slots indicates how many child node positions are left at a specific node until its fan-out is reached. The sort key may advantageously be used to sort various sibling nodes depending on their suitability as a backup node and/or their communications capabilities.

According to a further embodiment, said backup information is arranged in a load table which comprises one row per node and a plurality of columns comprising a node ID, information on whether a respective node of said plurality of network nodes is configured to operate as a potential backup node and/or a fan-out and/or a number of free slots and/or a sort key. The load table enables an efficient browsing and sorting of the sibling nodes.

According to a further embodiment, the network node is configured to signal a change of said local backup information to at least one further node. According to a preferred variant, messages comprising the relevant information can be exchanged between nodes to effect said signalling.

According to the present invention, said network node is configured to determine a potential backup node out of said one or more sibling network nodes of its parent node depending on its own node ID and/or on at least one of its own sibling nodes. The evaluation of its own ID enables the network node to determine a potential backup node without any knowledge on its own sibling nodes and thus requires no signalling for the determination. On the other hand, when determining the potential backup node depending on at least one of its own sibling nodes, the network node may advantageously synchronize itself with its siblings regarding the usage of the potential backup nodes thus enabling to fairly share the load on the potential backup nodes.

According to a further embodiment, said network node is configured to sort the network node and its siblings in an ascending or descending order of their node ID to obtain a numbered sequence of nodes, and to assign backup parent nodes to the nodes of said sequence depending on a sequence number of the specific node and on an overall number of backup parent nodes.

According to a further embodiment, said network node is configured to receive backup information regarding its own aunt and uncle nodes and/or to signal information regarding its child nodes to further child nodes.

According to a further embodiment, said network node is configured to receive a request of a further node for a potential backup node, and to forward information regarding said potential backup node to said further node.

According to a further embodiment, said network node is configured to determine a capacity value that defines a node's suitability as a potential backup parent for at least one network node comprised within a sub-tree associated with said network node. According to a further preferred embodiment, said network node is configured to determine said capacity value depending on a number of active child nodes of a respective node, a fan-out of said respective node, and a number of backup children that are already registered for said respective node.

According to a further embodiment, said network node is configured to sort a plurality of nodes of said sub-tree according to said capacity value, and to forward information on a potential backup node having the highest capacity value to said further node which ensures an efficient assignment of backup nodes depending on the respective capabilities.

A further solution to the object of the present invention is given by a method of operating a network node for a streaming tree network, wherein said node maintains local backup information on at least one potential backup node that is capable of replacing a parent node of said network node and/or a parent node of a further network node in case of failure of said parent node.

Further advantageous embodiments are given by the dependent claims.

Brief Description of the Figures

Further aspects, features and embodiments of the present invention are given in the following detailed description with reference to the drawings, in which:

| Figure 1 | depicts an embodiment of a streaming tree network, |
|---|---|
| Figure 2a | depicts a simplified block diagram of a network node according to one embodiment of the invention, |
| Figure 2b | depicts a load table as used by the network node of Figure 2a, |
| Figure 3 | depicts the streaming tree network of Figure 1 after establishment of a backup node, |
| Figure 4a, 4b | depict a node join procedure in the context of the streaming tree network of Figure 1, |
| Figure 5 | depicts the streaming tree network of Figure 4b after a node leave event, |
| Figure 6a, 6b | depict communications flows in the course of the node join procedure according to Figure 4a, 4b, |
| Figure 6c, 6d | depict communications flows in the course of the node leave procedure according to Figure 5, |
| Figure 7a | depicts a further embodiment of a streaming tree network, |
| Figure 7b | depicts the streaming tree network of Figure 7a after establishment of backup nodes, |
| Figure 7c, 7d | depict a node join procedure in the context of the streaming tree network of Figure 7a |
| Figure 8a, 8b | depict communications flows in the course of the node join procedure according to Figure 7c, 7d, |
| Figure 8c, 8d | depict communications flows in the course of a node leave procedure, |
| Figure 9 | depicts a further embodiment of a streaming tree network, |
| Figure 10a, 10b, 10d | depict different node constellations according to a further embodiment, and |
| Figure 11 | depicts a node join procedure in the context of the streaming tree network according to Figure 9. |

Description of the Embodiments

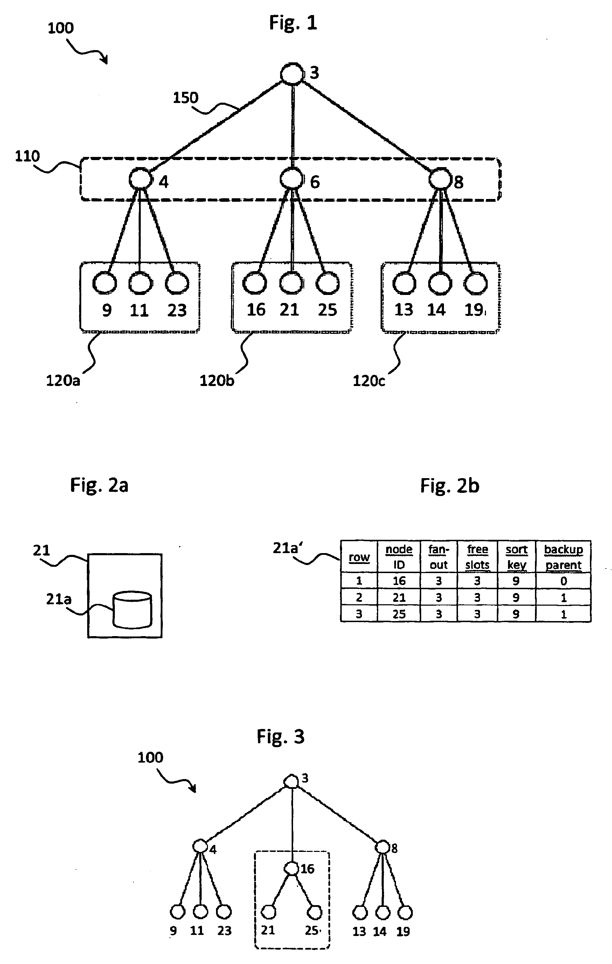

Figure 1 depicts an embodiment of a streaming tree network 100, which may e.g. be used to distribute a variety of different data streams to a plurality of network nodes. For instance, the network nodes of the streaming tree network 100 may comprise network-enabled personal computers or any other network elements with a suitable network interface that enables to establish logical links 150 to further network elements.

The network nodes of the streaming tree network 100 are arranged in a logical tree-like topology which comprises a plurality of levels. Reference sign 3 depicts a network node that represents the root level of the tree topology. Network nodes 4, 6, 8, which are child nodes to the root node 3, represent an intermediate level of the network 100. Node 4 comprises three child nodes 9, 11, 23, whereas node 6 comprises three child nodes 16, 21, 25, and node 8 comprises three child nodes 13, 14, 19. Since the nodes 9, 11, 23, 16, 21, 25, 13, 14, 19 constitute the lowest level of the network 100, they are also denoted as "leaf nodes".

Nodes 9, 11, 23 having the same parent node 4 are also denoted as sibling nodes or simply siblings, whereas siblings 6, 8 of a node's parent node 4 are also referred to as aunt and/or uncle nodes or simply aunts and/or uncles.

As is per se known, the logical tree-like topology of network 100 may e.g. be established independent of an actual underlying physical network infrastructure such as the Internet, a local or wide area network (LAN, WAN) or even a wireless LAN (WLAN) or any other network infrastructure enabling the nodes 3, 4, 6, 8, .. to communicate with each other.

Streaming trees such as defined by network 100 usually suffer from the disadvantage that child nodes 16, 21, 25 are losing their connection to the remaining network nodes if an upper level node such as the parent node 6 fails or explicitly leaves the tree topology 100. In these cases data streaming to the respective child nodes 16, 21, 25 is interrupted which is highly undesirable.

In order to promptly recover the tree connectivity in such cases, which enables to supply the affected nodes 16, 21, 25 with streaming data, a network node 21 according to an embodiment of the present invention is configured to maintain local backup information on at least one potential backup node 16 that is capable of replacing the parent node 6 of said network node 21.

The provisioning of the local backup information within the network node 21 advantageously enables to promptly react to link failures and avoids lengthy signaling procedures as known from prior art systems.

Figure 2a schematically depicts a simplified block diagram of a network node 21 according to one embodiment. Node 21 comprises local backup information 21a which may e.g. be stored to local memory means comprised within said node 21. For instance, said local backup information 21a may be comprised in a local database of said node 21 or in a simple list or table or some other form suitable for prompt access in the case of a link failure.

According to a preferred embodiment, said local backup information 21a comprises information on one or more network nodes 16, 21, 25 having the same parent node 6 as the network node 21. This is particularly advantageous, since it enables the network node 21 to efficiently select one of its siblings 16, 25 as a backup node. It is also possible that said backup information 21a comprises information on the suitability of the node 21 itself as a backup node. In this case, too, an efficient establishment of a backup structure within the affected tree portions is possible since no signaling with further nodes 4, 8 is required to again supply the affected child nodes 16, 21, 25 of the failing parent node 6 with streaming data. In this case, the node 21 itself will replace its failed parent node 6.

It is further preferred that all child nodes 16, 21, 25 of a parent node 6 comprise the functionality of the above explained embodiment, i.e. locally provide backup information 21a. In this case, these child nodes 16, 21, 25, or siblings, as seen from their own network level, constitute a specific group 120b of nodes which is also referred to as "pre-failure-network", since these nodes 16, 21, 25 will collaboratively build a backup-sub-tree of the network structure if their parent node fails by using the locally provided backup information.

Likewise, the nodes 9, 11, 23 may constitute a further pre-failure-network 120a, the nodes 13, 14, 19 may constitute a further pre-failure-network 120c. Of course, the intermediate nodes 4, 6, 8 may also constitute a further pre-failure-network 110 in the sense of the present embodiment.

I.e., by means of the locally stored backup information 21a (Fig. 2a), the nodes of the network 100 are enabled to efficiently rebuild the tree topology in order to supply each node with streaming data.

According to a further embodiment, said local backup information 21a comprises information on one or more sibling network nodes 4, 8 of said parent node 6, i.e. the network node 21 locally maintains backup information 21a on its own aunt and uncle nodes as potential backup parent nodes. Thus, node 21 may use its own siblings 16, 25 and/or the siblings 4, 8 of its parent node 6 for backup purposes.

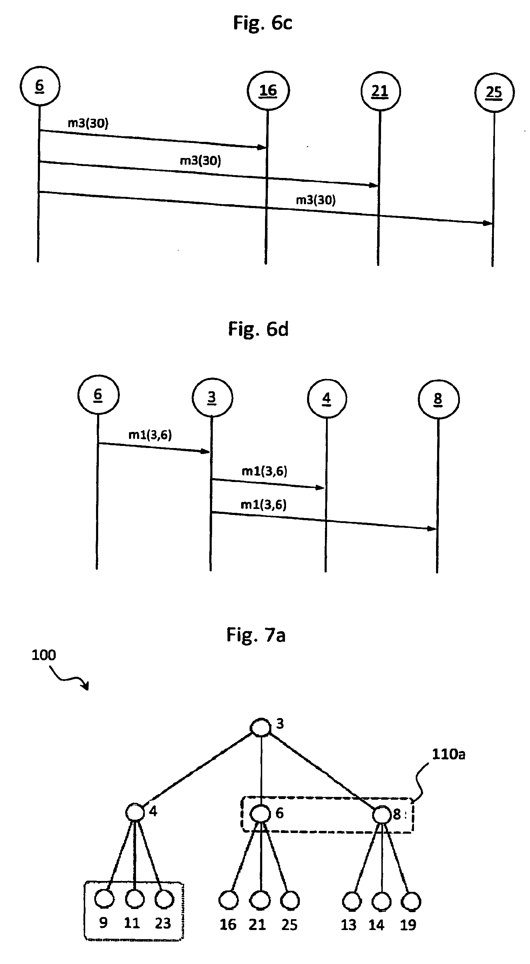

The further explanations with reference to Figures 2b to 6d primarily contemplate using the node's siblings 16, 25 as backup nodes. A further embodiment, wherein aunt and/or uncle nodes are used as backup nodes is discussed further below with reference to Figures 7a to 8d.

According to a further embodiment, said local backup information 21a (Figure 2a) comprised within node 21 comprises information on which of said plurality of network nodes 16, 21, 25 is configured to operate as a potential backup node and/or a fan-out and/or a number of free slots and/or a sort key of the respective node 16, 21, 25.

A node's fan-out value is usually provided by the respective node itself and describes how many child nodes it may take to be filled up to capacity. The amount of free slots indicates how many child node positions are left at a specific node until its fan-out is reached. The sort key may advantageously be used to sort various sibling nodes 16, 21, 25 depending on their suitability as a backup node and/or their communications capabilities.

According to a further embodiment, a very efficient way of arranging said backup information 21a within a node 21 is a load table, an example of which is depicted by Figure 2b.

The load table 21a', which may e.g. be used to organize the backup information 21a (Figure 2a) that is locally stored within said node 21, may e.g. comprise one row per node. I.e., since the currently discussed pre-failure-network 120b comprises a total of three sibling nodes 16, 21, 25, the load table 21a' comprises three rows for the three nodes 16, 21, 25. The title row of table 21a', which comprises column titles, of course, only serves illustrative purposes.

As can be seen from Figure 2b, the load table 21a' has a plurality of columns comprising

- a node ID, which in the present example corresponds to the respective reference signs used to denote specific nodes,

- information on whether a respective node of said plurality of network nodes is configured to operate as a potential backup node (column "backup parent"),

- a fan-out value,

- a number of free slots, and

- a sort key.

The load table 21a' enables an efficient browsing and sorting of the sibling nodes 16, 21, 25.

According to a preferred embodiment, each node 16, 21, 25 of the pre-failure network 120b manages backup information concerning the pre-failure network 120b, preferably in the tabular structure as explained above with reference to Figure 2b. For instance, each node 16, 21, 25 of the pre-failure network 120b may locally store an instance of the same load table 21a'. As already explained, the load table 21a' contains a table row for each node 16, 21, 25 that is part of the pre-failure network 120b and stores additional information (fan-out, free slots, backup parent) describing the node's capacity. All nodes 16, 21, 25 from the same pre-failure network 120b are preferably required to always hold completely identical load tables 21a' to be sure they work on the same basis in the case of a network failure that affects streaming operation to them, i.e. due to a failure of parent node 6.

Preferably, each member of the respective pre-failure networks 110, 120a, 120b, 120c comprises a local load table 21a', which is identical to the load tables of its siblings that define the further members of the respective pre-failure networks 110, 120a, 120b, 120c. Thus, in case of an arbitrary connectivity failure throughout the whole network 100, the affected nodes can efficiently rebuild the tree topology, i.e. fully establish backup sub-trees and the like.

According to a further embodiment, the sort-key information may be used to sort the members 16, 21, 25 in a specific order according to their suitability as a backup node. The sort key value may e.g. be determined by multiplication of the "fan-out" value and the "free slots" value and may be used as a primary indicator for table sorting of the load table 21a'. High values of fan-out and free slots qualify a node to be placed in an upper layer of a potential backup sub-tree, because such a node can support a corresponding number of child nodes. Therefore, the table 21a' is preferably sorted in descending order by the sort key. For the case of multiple nodes having equal sort key values in the load table 21a', the node id is used as a secondary sorting criterion, i.e. in an ascending order. The table column "backup parent" describes the row number that will be the parent node in the backup sub-tree.

As already mentioned above, the nodes 16, 21 and 25 constitute a pre-failure network 120b. Each of the nodes 16, 21, 25 preferably has exactly the same load table 21a' as depicted by Figure 2b. For the present example, a fan-out value of three is asserted for each node 16, 21, 25. The values in column "backup parent" describe the row numbers from the node table, which contain the certain parent node, i.e. that node of the pre-failure network 120b that represents a potential backup node. Presently, a backup parent value of "0" identifies node 16 to be the root of the backup sub-tree, i.e. the potential backup parent for the case of failure of the current parent node 6.

According to a further embodiment, the potential backup node 16 is configured to contact its grandparent node 3 for temporary stream recovery as the only one. I.e. the further nodes 21, 25 of the pre-failure network 120b do not contact the grandparent node 3 since from their respective backup parent values of "1" they can determine that they are no potential backup parent nodes.

Exemplary in reference to the load table 21a', node 25 looks up its backup parent value in its load table. It finds the value "1", which invokes it to search for table row number 1 that contains its planned backup parent node 16. In row 1, node 25 finds the id of node 16, which will thus be considered as its backup parent in case of temporary recovery becoming necessary. Likewise, node 21 looks up its backup parent value in its load table. It finds the value "1", which invokes it to search for table row number 1 that contains its planned backup parent node 16. In row 1, node 25 also finds the id of node 16, which will thus be considered as its backup parent in case of temporary recovery becoming necessary. Thus, from analyzing their own local load table 21a', the nodes 21, 25 can determine their planned backup parent node in the case of a link failure. Moreover, from analyzing its own local load table 21a', the nodes 16 can determine that it is determined to be the backup parent node for its siblings 21, 25 in the case of a link failure.

According to a further embodiment, a new sub-tree structure for the pre-failure network 120b is established according to the backup information 21a comprised in the load tables 21a' of the member nodes 16, 21, 25 if their parent node 6 fails. As a result, the whole streaming tree network assumes the topology as depicted by Figure 3. Node 16 is the root of the backup sub-tree and therefore replaced its former parent node 6. Nodes 21 and 25 got bound to node 16 as child nodes, as defined by the load table 21a'.

A particular advantage of the above explained embodiments of the invention is the fact that upon failure of a parent node 6 its siblings 4, 8 do not get affected or involved in any backup or restructuring measures. Consequently, Figure 3 shows the nodes 4 and 8 resting at their original positions, cf. Figure 1, and keeping their child nodes. The network branches associated with nodes 4, 8 remain completely unaffected when node 6 fails.

According to the above explained embodiments, apart from locally maintaining backup information 21a (Figure 2a), preferably in form of a load table 21a' (Figure 2b), the network nodes 16, 21, 25 have to take different roles and have certain areas of responsibility to ensure a successful organization of a pre-failure network 120b and failure response.

For an exchange of information between the involved nodes, various message types are introduced according to a further embodiment. That is, the network nodes are configured to signal e.g. a change of said local backup information 21a to at least one further node. By definition, each message is preferably sent by one node and received by a single target node, which both can be either a parent node or a child node. Further, by definition, a node preferably cannot send a message to itself. Moreover, every message may contain information (e.g., alteration or deletion) about a certain node and may also identify the pre-failure network 120b this node is part of. Advantageously, a minimal number of required parameters are the id of the certain node and the id of its parent node to identify the pre-failure network 120b. The following three messages are used to communicate changes of pre-failure networks 120b.

RecoveryUpdateMessage(ID1, ID2)

The RecoveryUpdateMessage is employed to communicate changes of existing nodes or to introduce new nodes to the pre-failure network 120b. A recipient node of the RecoveryUpdateMessage has to update the node with the delivered id to its local load table, or add it if it does not already exist. The first parameter ID1 of the RecoveryUpdateMessage is the id of the node, which is parent of the affected pre-failure network, e.g. node 6 for the pre-failure network 120b. The second parameter ID2 of the RecoveryUpdateMessage identifies the node which has experienced a change.

RecoveryRemoveMessage(ID1)

A RecoveryRemoveMessage tells a recipient node to remove the node with the delivered node id "ID1" from its load table 21a'. The single parameter ID1 denotes the node which has to be deleted from the recipient node's pre-failure network, e.g. from the list representing the backup information 21a or the load table 21a', respectively.

RecoveryGrandparentMessage(ID1)

The RecoveryGrandparentMessage tells a recipient node the contact address of its grandparent node, which is required for replacement of the parent node in case of failure. The single parameter ID1 identifies the grandparent node.

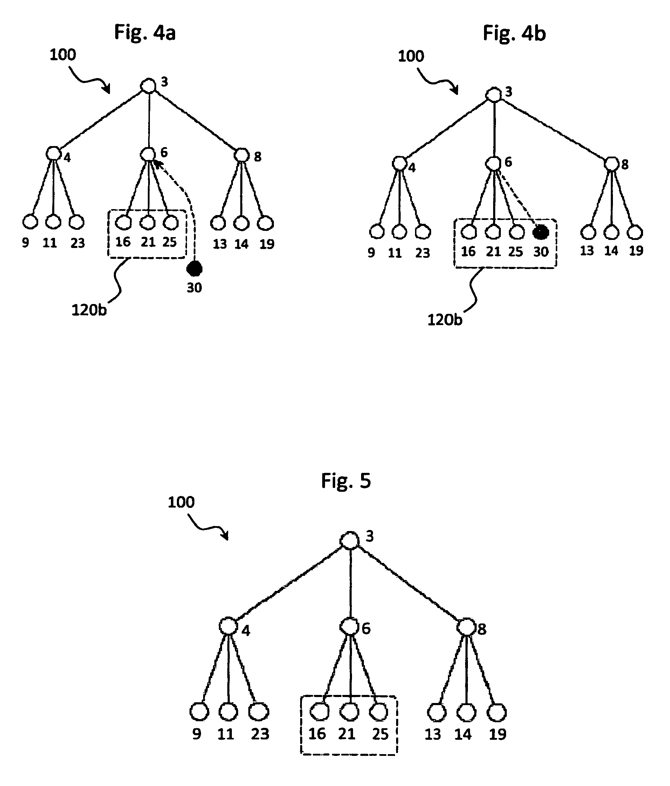

Figure 4a, 4b depict a further embodiment of the invention which comprises a node join procedure in the context of the streaming tree network of Figure 1 by using the above explained messages. Presently, a new node 30 joins the pre-failure network 120b.

The presently discussed pre-failure network 120b is framed by a dashed rectangle in Figures 4a, 4b. It initially comprises the nodes 16, 21, and 25. A new node 30 has just joined the parent node 6 as a child and now has to take part in pre-failure calculations, i.e. information on the newly joined node 30 has to be added to the backup information 21a according to the inventive embodiments in order to enable node 30 to actively take part in the backup and tree restore mechanisms explained above.

Node 6 is the parent node of nodes 16, 21, 25, and 30 and therefore also is the parent node of the whole pre-failure network 120b, while node 3 is the grandparent node of nodes 16, 21, 25, and 30, and the parent node of node 6.

The following table 1 represents a load table of node 4 as maintained prior to the joining of node 30:

(table 1)

| row | node ID | fan-out | free slots | sort key | backup parent |
|-----|---------|---------|------------|----------|---------------|
| 1 | 4 | 5 | 2 | 10 | 0 |

(continued)

| row | node ID | fan-out | free slots | sort key | backup parent |
|-----|---------|---------|------------|----------|---------------|
| 2 | 6 | 5 | 2 | 10 | 1 |
| 3 | 8 | 5 | 2 | 10 | 1 |

As can be gathered from table 1, nodes 4, 6 and 8 are capable of taking 5 child nodes each (fan-out), while each of their children 16, 21, and 25 can deliver 3 child nodes in this example, cf. table 2 below, which represents a load table of node 16 as maintained prior to the joining of node 30:

(table 2)

| row | node ID | fan-out | free slots | sort key | backup parent |
|-----|---------|---------|------------|----------|---------------|
| 1 | 16 | 3 | 3 | 9 | 0 |
| 2 | 21 | 3 | 3 | 9 | 1 |
| 3 | 25 | 3 | 3 | 9 | 1 |

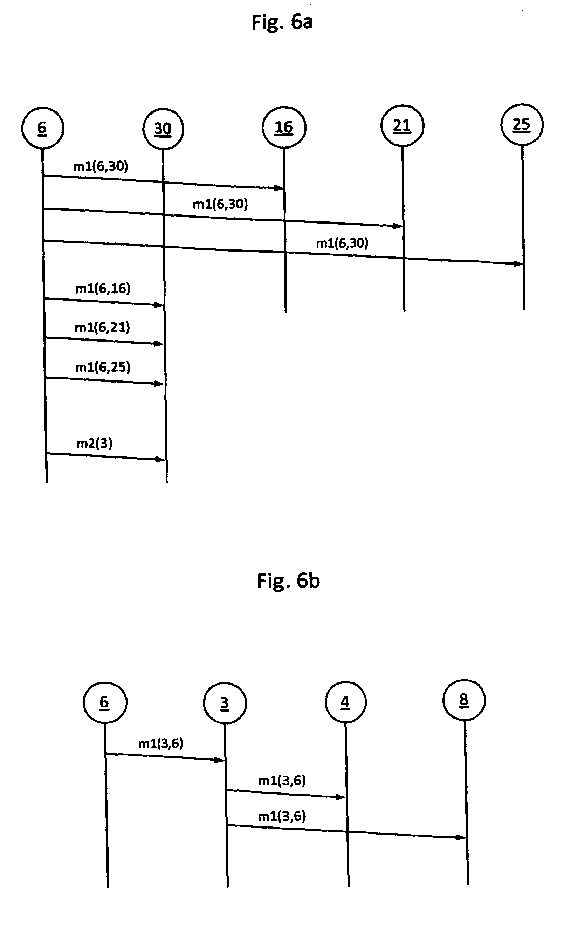

As already explained above, the load tables of a specific pre-failure network's nodes are preferably always congruent, which is e.g. ensured by mutual synchronization, cf. the explanations with reference to Figure 6b below. In the present case, this specifically applies to the nodes 4, 6, 8 as well as for the nodes 16, 21, 25, i.e. nodes 4, 6, 8 have load tables according to table 1 above, and nodes 16, 21, 25 have load tables according to table 2 above.

After node 30 has finished its joining procedure at the streaming tree network 100, it is bound to node 6 as the child in a parent-child relationship. The joining itself may e.g. be performed by per se known signalling mechanisms suitable for application within streaming tree networks 100.

According to the present embodiment, after the joining of node 30, node 6 initiates a process of load table maintenance of its child nodes 16, 21, 25, 30 to ensure that the backup information 21a according to the inventive embodiments is up to date, i.e. particularly reflects the altered structure of the pre-failure network 120b having a new sibling node 30. For conducting this process of load table maintenance, parent node 6 needs to inform child nodes 16, 21, and 25 about their new sibling 30. Moreover, parent node 6 has to notify node 30 that the nodes 16, 21, and 25 are part of its pre-failure network 120b so that the new node 30 can update its load table accordingly. Furthermore, node 30 needs to be notified about the identity of its grandparent node 3.

Figure 6a depicts the message flow employed according to a preferred embodiment so as to accomplish the steps of signalling involved in the above explained process of load table maintenance.

Firstly, parent node 6 issues a RecoveryUpdateMessage m1 with the parameters (6,30) to its child node 16 to notify the child node 16 about a new sibling or member node of the pre-failure network 120b. As already explained above, the first parameter of the RecoveryUpdateMessage m1 defines the current parent node 6, and the second parameter of the RecoveryUpdateMessage m1 identifies the new node 30.

Parent node 6 also informs the further child nodes 21, 25 accordingly by transmitting respective messages m1(6,30) to the nodes 21, 25.

After that, parent node 6 notifies new node 30 on its "new" siblings 16, 21, 25, which is also accomplished by forwarding a total of three messages m1 of the RecoveryUpdateMessage type to new node 30: m1(6,16), m1(6,21), m1(6,25).

Finally, a RecoveryGrandparentMessage m2(3) is also sent to the new node 30 to notify it on its new grandparent node 3.

According to the present embodiment, the messages m1, m2 explained above with reference to the communications diagram of Figure 6a are used to create a load table at node 30 and to extend the load tables of nodes 16, 21 and 25 by information related to node 30. After these messages have been sent and received, the load tables of nodes 16, 21, 25 and 30 are congruent, i.e. all members or sibling nodes 16, 21, 25, 30 of the pre-failure network 120b (Figure 4b) have identical load tables and can thus efficiently reorganize themselves in case of failure of their parent node 6. The contents of the load tables of nodes 16, 21, 25 and 30 after the procedure according to Figure 6a are depicted by table 3 below:

(table 3).

| row | node ID | fan-out | free slots | sort key | backup parent |
|---|---|---|---|---|---|
| 1 | 16 | 3 | 3 | 9 | 0 |
| 2 | 21 | 3 | 3 | 9 | 1 |
| 3 | 25 | 3 | 3 | 9 | 1 |
| 4 | 30 | 3 | 3 | 9 | 1 |

As a further effect of adding new node 30 to parent node 6, the free slots value of parent node 6 has altered. Hence, parent node 6 has to commit this change to its own parent node 3, because the pre-failure network 110 of node 6 (consisting of nodes 4, 6, 8) needs to be rebuilt. Accordingly, node 6 issues a RecoveryUpdateMessage m1(3,6) to its parent node 3, cf. the communications diagram of Figure 6b. As a consequence, in order to inform nodes 4 and 8 about the change, node 3 passes the RecoveryUpdateMessage m1(3,6) to the nodes 4, 8.

After these messages m1(3,6) have been handled by the recipient nodes 3, 4, 8, all affected nodes are informed about the change in the tree topology and are enabled to correspondingly update their pre-failure networks 110. The load table of nodes 4, 6, and 8 finally looks as depicted by table 4 below. The nodes' order has changed with respect to table 1 above, i.e. the situation prior to the joining of node 30, because node 6 has a smaller sort key value since it has received node 30 as a new child node.

(table 4)

| row | node ID | fan-out | free slots | sort key | backup parent |
|---|---|---|---|---|---|
| 1 | 4 | 5 | 2 | 10 | 0 |
| 2 | 8 | 5 | 2 | 10 | 1 |
| 3 | 6 | 5 | 1 | 5 | 1 |

Figure 4b depicts the resulting tree structure after a successful joining process of node 30 as a child node to parent node 6.

According to a further embodiment, if a child node leaves its parent node, the load tables of its siblings and its parent need to be updated as well. In the present example, node 30 parts from the streaming tree, Figure 5. Thus, the load tables of nodes 4, 6, 8 and 16, 21, 25 have to be updated.

Since only the parent node 6 of node 30 detects the parting or the absence of node 30, the parent node 6 has to inform the other member nodes 16, 21, 25 of the affected pre-failure network 120b. To accomplish this, parent node 6 notifies the other member nodes 16, 21, 25 by means of respective RecoveryRemoveMessage notifications, cf. the messages m3(30) of Figure 6c. Upon receipt of these messages m3(30), nodes 16, 21, and 25 can update their load tables, which will assume a form as represented by table 2 above.

Moreover, the state of node 6 has changed, because its amount of free slots has increased due to the parting of node 30. Node 6 sends an update message to its parent node 3 in order to have its pre-failure siblings 4, 8 be informed by node 3 about the structural change, cf. Figure 6d and the respective RecoveryUpdateMessage notifications m1(3,6). In order to notify nodes 4 and 8 about the change, node 3 passes the update messages m1(3,6) to them.

Thus, all remaining relevant nodes 3, 4, 8 are informed and their load tables are up-to-date again. The final load table structure of nodes 4, 6, 8 is identical to that of table 1 above. The corresponding tree topology is depicted by Figure 5.

According to a further embodiment, positions of nodes of a pre-failure network 120b in a backup sub-tree are calculated by iterating over the load table. This means to create table sections dependant on the preceding sections' capacities. Each table section (respectively backup sub-tree layer) contains a number of nodes equal to the sum of free slots of all nodes from the previous section. This allows creation of the backup sub-tree in regard of special node capacities, such as a very high fan-out of a single node for example.

Every node of the streaming tree or at least of a specific pre-failure network 120b is configured to run through this procedure for its pre-failure network load table 21a' (Figure 2a) completely on its own, preferably every time the contents of the load table 21a' change, i.e. due to a node join or node leave event.

The algorithm according to the present embodiment requires an ordered load table and two structures to represent several attributes of node sets in order to begin. The set structures must be able to store the size of a set, the sum of free slots of a set and the row number of the first node within it. A set represents a section of the load table. Firstly, a table row is pulled from the table. If it is the first row at all, this row is set as the root of the backup sub-tree and its attributes are stored in the currentSet variable. From now on, each row is handled the same. If there are free slots in the currentSet variable, the algorithm searches for one of them by calculating a possible parent node from the currentSet. In case this potential parent node has free slots, the row gets it assigned as its backup parent node. The node's attributes are added to those stored in nextSet, because the node may become a parent node for the next tree layer. Otherwise, the algorithm checks further nodes from the currentSet until the free slot is found. In case there are no free slots in the currentSet, a new tree layer is opened up and currentSet and nextSet are swapped. All upcoming table rows now are assigned to the next backup sub-tree layer until it is completely filled.

I.e., according to the present embodiment, positions of nodes of a pre-failure network 120b in a backup sub-tree are given by a load table. A load table is set up in sections. Each load table section contains a number of nodes equal to the sum of free slots of all nodes from the previous section. As an example, the first section in a load table consists of four nodes if the parent peer, i.e. node, has a capacity of four. Hence if these four nodes in the first section each also have a capacity of four, the next section in the load table can consist of 16 nodes. This setup of the load table in sections allows creation of the backup sub-tree in regard of special node capacities, such as a very high fan-out of a single node for example.

To get a node's position in the backup sub tree, a node has to iterate about the self-calculated load table to get its new position in the backup tree.

To calculate a load table with the present embodiment, a given algorithm according the present embodiment requires a pre-ordered load table according to the node's capacities and two virtual structures "currentSet" and "nextSet", cf. above, which represent attributes of nodes in order to begin. A node set which consists of a node's characteristics must be able to store the size (node count), the sum of free slots and the row number of the first node within it. A node set is mapped into a row of a load table. To get a load table which builds up the backup tree in case of a node failure a given algorithm assigns backup parents to each node set in a row.

At first, the first row of the load table is taken. This row is set as the root of the backup sub-tree and its attributes are stored in a so called 'currentSet' variable. From now on, each row is handled the same. If there are free slots in the currentSet variable, the algorithm searches for one of them by calculating a possible parent node from the currentSet. In case this potential parent node has free slots, the row gets it assigned as its backup parent node. The node's attributes are added to those stored in nextSet, because the node may become a parent node for the next tree layer. Otherwise, the algorithm checks further nodes from the currentSet until the free slot is found. In case there are no free slots in the currentSet, a new tree layer is opened up and currentSet and nextSet are swapped. All upcoming table rows now are assigned to the next backup sub-tree layer until it is completely filled.

The following description demonstrates the procedure of iterative backup parent calculation according to the present embodiment by using an example of 7 nodes.

(table 4a - Load table for iterative calculation of backup nodes)

| Row | Node ID | Fan-Out | Free Slots | Sort Key | Backup Parent |
|-----|---------|---------|------------|----------|---------------|
| 1 | 2 | 3 | 3 | 9 | ? |
| 2 | 3 | 3 | 3 | 9 | ? |
| 3 | 4 | 3 | 3 | 9 | ? |
| 4 | 5 | 3 | 3 | 9 | ? |
| 5 | 6 | 3 | 3 | 9 | ? |
| 6 | 7 | 3 | 3 | 9 | ? |
| 7 | 8 | 3 | 3 | 9 | ? |

Table 4a shows an ordered load table with the column of backup parents not yet filled. The iterative procedure picks the first row from the load table and sets it as the root node of the backup sub-tree. Particularly, the backup parent is set to 0 (cf. table 4b below), which means that it is the backup tree root and has no backup parent from within the load table.

(table 4b - The backup tree root)

| Row | Node ID | Fan-Out | Free Slots | Sort Key | Backup Parent |
|-----|---------|---------|------------|----------|---------------|
| 1 | 2 | 3 | 3 | 9 | 0 |

The root node's amount of free slots is 3, as shown in (table 4b. This means that the next tree layer may contain three nodes at a maximum. Hence, the step to proceed is to select the upcoming three rows from the load table in order to fill the second tree layer. All nodes from the second layer have to take the root node as their parent; it is located in the first table row, so their backup parent value is 1.

(table 4c - Second layer of the backup tree)

| Row | Node ID | Fan-Out | Free Slots | Sort Key | Backup Parent |
|-----|---------|---------|------------|----------|---------------|
| 1 | 2 | 3 | 3 | 9 | 0 |
| 2 | 3 | 3 | 3 | 9 | 1 |
| 3 | 4 | 3 | 3 | 9 | 1 |
| 4 | 5 | 3 | 3 | 9 | 1 |

Now, the second layer contains three nodes located in table rows 2 - 4. They deliver 9 free slots for the third backup tree layer. Hence, the algorithm has to select the succeeding 9 nodes from the load table in order to assign them to these free slots. The slots are preferably filled regarding to homogenous distribution of child nodes over all nodes from the layer above. The last three rows from the load table therefore are assigned to different parent nodes as shown in table 4d.

(table 4d - Complete calculation of backup)

| Row | Node ID | Fan-Out | Free Slots | Sort Key | Backup Parent |
|-----|---------|---------|------------|----------|---------------|
| 1 | 2 | 3 | 3 | 9 | 0 |
| 2 | 3 | 3 | 3 | 9 | 1 |
| 3 | 4 | 3 | 3 | 9 | 1 |
| 4 | 5 | 3 | 3 | 9 | 1 |
| 5 | 6 | 3 | 3 | 9 | 2 |
| 6 | 7 | 3 | 3 | 9 | 3 |
| 7 | 8 | 3 | 3 | 9 | 4 |

The above explained embodiments enable an immediate, fast, independent and efficient recovery of a tree topology in case of a stream failure. A minimum effort regarding peer-to-peer communications (i.e. communications between sibling nodes) is guaranteed due to backup information stored locally in the nodes, and peer-to-peer communications is restricted to the members of a pre-failure network 120b.

According to a further embodiment, which is explained below with reference to Figures 7a to 8d, the network element is configured to use aunt and/or uncle nodes as backup nodes for the case of failure, in contrast to using its own siblings. Consequently, in this embodiment, the backup information 21a (Figure 2a) or a respective load table 21a' (Figure 2b) comprises information on aunt and/or uncle nodes that are potential backup nodes. I.e., siblings of a parent node can be used to enable fallback for at least temporary stream recovery in case the parent node fails.

In the context of the present embodiment and in analogy to the above explained pre-failure networks 110, 120a, 120b, 120c, a pre-failure network can be defined as a collection of all siblings of one single node. Such pre-failure network can be used for temporary stream recovery for the single node's child nodes in case of its failure.

According to a preferred embodiment, nodes do not exactly know which node from the pre-failure network will be its backup parent node on failure, but they are configured to determine such backup parent node on their own if it is necessary.

An exemplary pre-failure network based on aunt and/or uncle nodes is presented by Figure 7a. The three nodes 9, 11, 23 framed by a dotted rectangle all have the same pre-failure network 110a comprising the nodes 6, 8 which are siblings of the parent node 4 of the three nodes 9, 11, 23. The parent node 4 itself is not part of the pre-failure network 110a, because it is the one whose failure shall be compensated by the pre-failure network 110a. In analogy, nodes 4, 8 form a respective pre-failure network (not shown) for the nodes 16, 21, and 25, and nodes 4, 6 form a respective pre-failure network (not shown) for the nodes 13, 14, and 19.

According to the present embodiment, at least one node, but preferably every node 9, 11, 23 comprises locally stored backup information which in the present case represents information about its pre-failure network 110a and the involved potential backup nodes 6, 8 constituting said pre-failure network 110a.

Preferably, said backup information is arranged in form of an ordered list of nodes or a table. Such list or table may have a form similar to that of the load table 21a' described above with reference to Figure 2b and is thus also referred to as load table for the further explanations, although slight variations regarding the table structure and/or contents may occur. Nevertheless, the load table according to this embodiment, too, represents a form of arranging data related to potential backup nodes 6, 8, as with the further embodiments already explained above.

According to a preferred embodiment, the load table comprises all siblings 6, 8 of the parent node 4, i.e. the aunts and uncles of the child nodes 9, 11, 23. To ensure an efficient tree topology restructuring response in case of a failure, the child nodes 9, 11, 23 need to be up-to-date about their aunts and uncles 6, 8 at any time.

Additionally, the parent node 4 may mirror the pre-failure network related information of its children 9, 11, 23, i.e. their load tables, in order to keep them available for new nodes that join the parent node 4 as a child node. This advantageously reduces the amount of signaling required for adding new child node.

Returning to Figure 7a, the dashed rectangle indicates the pre-failure network 110a of the nodes 9, 11, 23 framed by a dotted line. The notation of this pre-failure network 110a comprising the nodes 6 and 8 (in the same order) is PN{6,8}.

According to a particularly preferred embodiment, nodes 9, 11, 23 are assigned to their aunts and uncles 6, 8 by means of an autonomous and independent calculation of the respective backup parent which is conducted by each child node 9, 11, 23. I.e., the child nodes 9, 11, 23 can advantageously determine their backup aunt/uncle node without requiring any communication or signaling with other nodes if they have proper backup information 21a that is locally stored.

In reference to Figure 7a, nodes 9, 11, and 23 are not required to know each other, but they all hold the same pre-failure network PN{6,8} 110a. The nodes 9, 11, 23 may use their own ids (9, 11, 23) to each calculate a suitable backup parent e.g. by means of a modulo operation with the overall amount of nodes in the pre-failure network 110a, i.e. presently a value of two, because of the two uncles/aunts 6, 8. The result of this operation is a sequence number indicating the position of the backup parent node in PN{6,8}.

For node 9, that has the id "9", the determination of the backup parent yields: 9 mod 2 = 1. If the list of potential backup parents of the pre-failure network 110a is counted starting from "0", this means that due to its id of "9", the node 9 is assigned to the 1-th node of the list of potential backup parents, i.e. to node 8.

For node 11, that has the id "11", the determination of the backup parent yields: 11 mod 2 = 1. Hence, due to its id of "11", the node 11 is also assigned to the 1-th node of the list of potential backup parents, i.e. to node 8. In the present case, the same applies to all other nodes having an odd id value, i.e. also to node 23. Only nodes with an even id would be assigned to the 0-th node of the list of potential backup parents, i.e. to node 6. However, since none of the nodes 9, 11, 23 has an even id, all of them are assigned to backup node 8, which results in a sub-optimal distribution of child nodes to the available backup nodes 6, 8, because node 6 is not used at all, while node 8 might be overburdened by three new child nodes 9, 11, 23.

A further improvement regarding assignment of the nodes 9, 11, 23 to a backup node 6, 8 is achievable if the nodes 9, 11, and 23 comprise information on each other. In this case, they are preferably configured to put themselves into an ascending order by their id and each of them calculates its appropriate backup parent ad-hoc. For this improved backup parent estimation, the nodes 9, 11, 23 use a modulo-function that alternately assigns them to node 6 or 8. This procedure can lead to an assignment of backup parent nodes as shown in table 5, which can be considered as a form of backup information or load table for the nodes 9, 11, 23.

(table 5)

| node ID | node sequence | parent sequence | backup parent |
|---------|---------------|-----------------|---------------|
| 9 | 0 | 0 | 6 |
| 11 | 1 | 1 | 8 |
| 23 | 2 | 0 | 6 |

As can be gathered from table 5, nodes 9, 11, and 23 are arranged into a sequence of ascending node ids, cf. the first column of table 5. Their sequence numbers are printed in the second column. Their common pre-failure network is PN{6,8} 110a and has a size of two elements. To calculate the parent sequence (cf. column 3), which defines for each node which parent node to use, the node sequence number from column 2 is modulated using the size "2" of the pre-failure network 110a.

Thus, for node 9, the parent sequence value is: 0 mod 2 = 0, wherein for node 11 the parent sequence value is: 1 mod 2 = 1, and for node 23 the parent sequence value is: 2 mod 2 = 0.

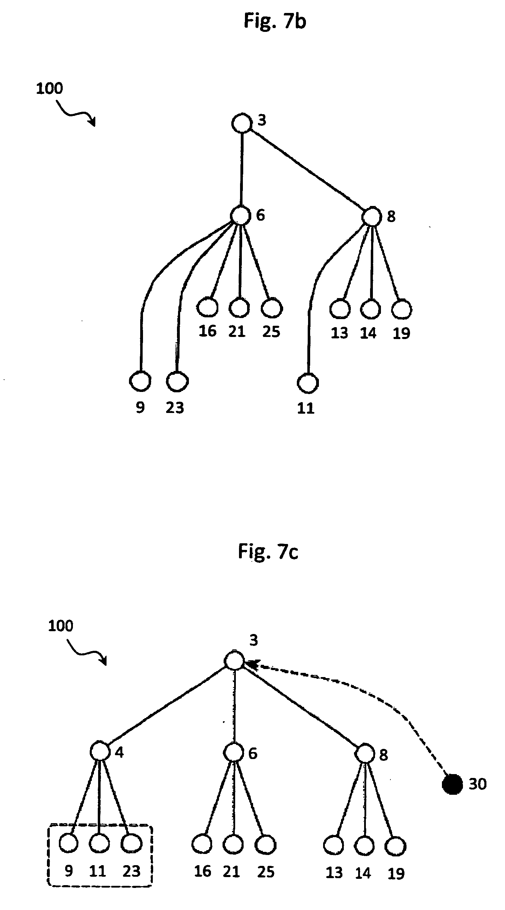

Applying the resulting parent sequence number to the pre-failure network PN {6,8} 110a, the backup parent for each node is obtained. On failure of node 4, nodes 9 and 23 are assigned to backup node 6, while node 11 is assigned to backup node 8 as depicted by Figure 7b.

According to an embodiment, during a pre-failure phase, i.e. before a parent node 4 fails, each node 9, 11, 23 assumes substantially two roles at the same time. Firstly, it is a child node of the parent node 4, which means that it is configured to receive information concerning its aunts and uncles 6, 8 (if available) and to store it as pre-failure network 110a, for instance in form of the backup information or a load table, respectively. Secondly, the node is configured to deliver information concerning each child node 9, 11, 23 to the other child nodes 9, 11, 23, because they have to know about their respective siblings. That is, a network node 23 is configured to receive backup information regarding its own aunt and uncle nodes 6, 8. In the case of a respective parent node 4, said parent node 4 is configured to signal information regarding its child nodes to further child nodes. Of course, depending on the tree topology, a specific network node may comprise both a functionality to receive backup information regarding its own aunt and uncle nodes and a functionality to signal information regarding its child nodes to further child nodes. For this purpose, there are two message types proposed that are preferably sent from parent node 4 to a child node 9, 11, 23. According to the present embodiment, it is not required for messages to float up the tree topology, i.e. from a child node to a parent node, which advantageously reduces signaling efforts.

A first proposed message that can be used for the signaling in the context of the present embodiment is the NodeUpdateMessage(ID1, ID2).

The NodeUpdateMessage can advantageously be used to introduce a new sibling node 11, 23 or a new aunt/uncle node 6, 8 to a child node 9. Whether the newly introduce node is a sibling or an aunt or uncle is indicated by the first parameter ID1 of the NodeUpdateMessage, that describes the node whose failure the message is related to. The second parameter ID2 of the NodeUpdateMessage defines the affected node that shall be updated or added to a certain pre-failure network.

A second proposed message that can be used for the signaling in the context of the present embodiment is the NodeRemoveMessage(ID1, ID2).

The NodeRemoveMessage informs a target or recipient node about removal of a certain node. Again, the first parameter ID1 describes the node whose failure is affected; the second parameter ID2 defines the certain node to be deleted.

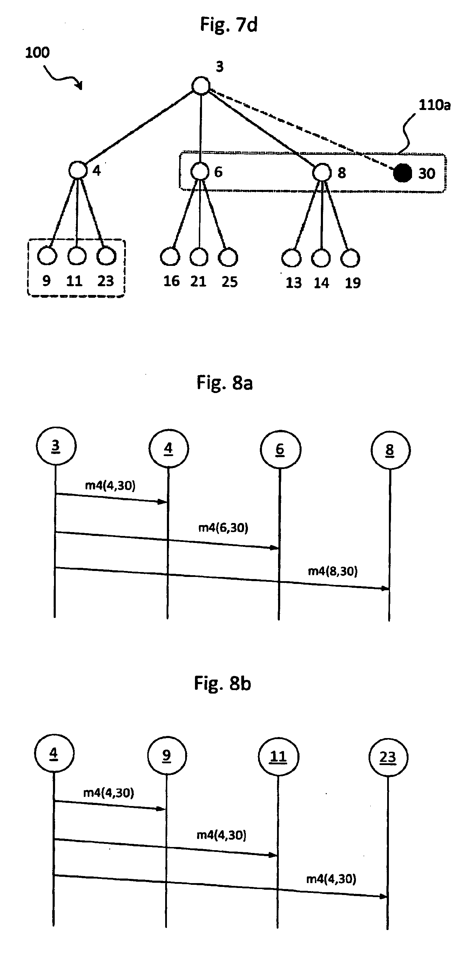

Figure 7c, 7d depict an embodiment related to a node join procedure in the context of the streaming tree network of Figure 7a. The dashed rectangle in Figure 7c indicates the nodes 9, 11, 23 that will be examined in the following description of a communications process that relates to the node join event. The common pre-failure network 110a of the nodes 9, 11, 23 consists of nodes 6 and 8, also cf. Figure 7a.

According to the present embodiment, node 30 has joined the streaming tree at node 3 and is bound in a parent-child relationship to node 3. The initial pre-failure network of nodes 9, 11, and 23 is PN{6, 8} as explained above. Node 4 advantageously also knows about this pre-failure network since node 4 is responsible for its child nodes 9, 11, 23. Now, that node 30 has just joined the tree 100, node 3 initiates maintenance of the pre-failure networks. First of all, the new node 30 is introduced as a sibling to all of the child nodes 4, 6, 8 of node 3.

For this purpose, node 3 is configured to signal corresponding information to its child nodes 4, 6, 8, which is preferably accomplished by the above explained mechanism using the NodeUpdateMessage, also cf. Figure 8a. Node 3 transmits a respective NodeUpdateMessage m4(4,30), m4(6,30), m4(8,30) to all of its child nodes 4, 6, 8 to notify them of their new sibling node 30.

Nodes 4, 6, and 8 are configured to recognize that this update must affect their respective child nodes, because their own IDs are set as first message parameter of the NodeUpdateMessage issued by node 3. Consequently, each of the nodes 4, 6, 8 takes the following measures that are explained only for the case of node 4 for sake of simplicity. The other nodes 6, 8 follow basically the same procedures.

Node 4 stores the new node 30 in addition to nodes 6 and 8 as an aunt or uncle node of its children, wherein said aunt or uncle node may also be used as a backup parent node. I.e., the aunt/uncle-based pre-failure network 110a is extended by the new node 30. Node 4 then passes the respective NodeUpdateMessage m4(4,30) downwards the tree topology to its child nodes 9, 11, 23, cf. Figure 8b.

As already explained, the first message parameter of message m4(4,30) remains the same, because the recipient nodes 9, 11, 23 must not store node 4 as possible backup parent. After having received the message, each of nodes 9, 11, and 23 know their pre-failure network 110a to be PN{6, 8, 30}, i.e. extended by the newly added node 30.

Additionally, node 3 is configured to notify node 30 of its pre-failure network, which would consist of all siblings of node 3. with the present example, there are no siblings to node 3, because node 3 is the root node. In effect, node 30 does not have a pre-failure network according to the aunt/uncle-based principle illustrated with reference to the Figures 7a to 8d.

However, according to a further embodiment, it is also possible to combine the various types of backup information and tree restructuring approaches of the above explained embodiments. For example, as explained, node 30 may not benefit from an aunt/uncle-based pre-failure network that may compensate for a failure of root node 3. Nevertheless, node 30 may very well comprise backup information on its sibling nodes 4, 6, 8 in order to use one of these nodes 4, 6, 8 as a potential backup parent node in case of a failure of root node 3. The corresponding embodiments have already been explained with reference to the Figures 1 to 6d. Consequently, a network node may advantageously use its own siblings and/or the siblings of its parent node (i.e. its own aunts and/or uncles) for backup purposes. This principle can be applied to any node of the streaming tree network 100 to ensure maximum resilience and flexibility.

Figure 7d shows the streaming tree topology after node 30 has completely been integrated into the pre-failure networks. The dotted rectangle 110a defines the pre-failure network of nodes 9, 11, and 23: PN{6, 8, 30}.

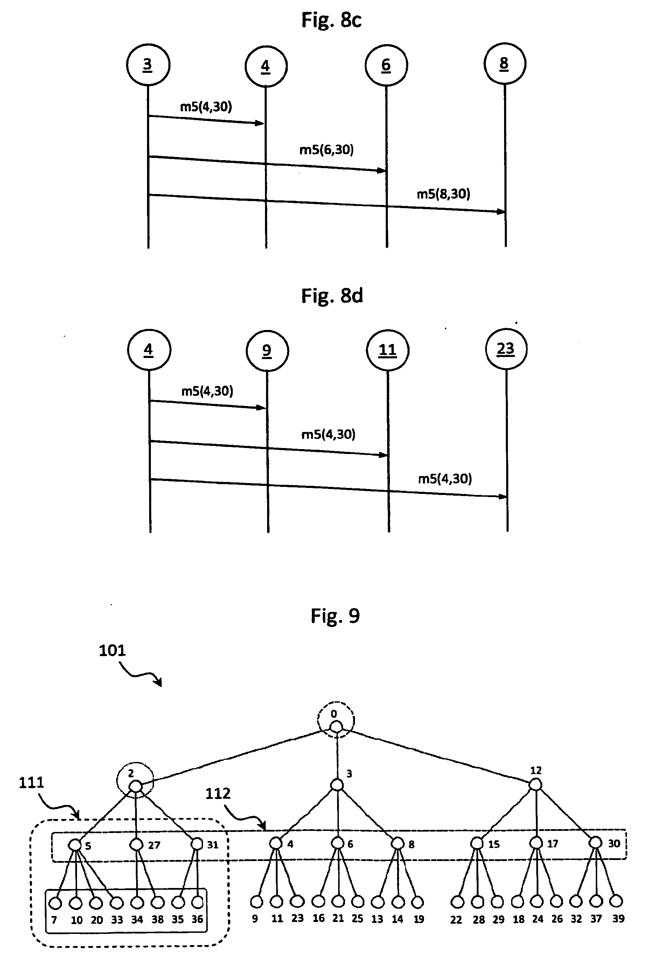

In case node 30 leaves the tree topology, root node 3 is the only one to detect this event, because it is the parent node of node 30. Root node 3 is thus preferably configured to send update messages to its child nodes 4, 6, 8 to notify them about the absence of node 30, cf. the NodeRemoveMessage notifications m5(4,30), m5(6,30), m5(8,30) of Figure 8c. The recipient nodes 4, 6, 8 are configured to be aware of the fact that these messages m5(4,30), m5(6,30), m5(8,30) affect their respective child nodes, because their own ids 4, 6, 8 are set as the first parameter of the messages m5(4,30), m5(6,30), m5(8,30). The nodes 4, 6, 8 are thus configured to pass the respective message m5(4,30) to the child nodes 9, 11, 23, .., cf. Figure 8d. Nodes 9, 11, and 23 are configured to detect the messages to affect their own pre-failure network 110a and therefore remove node 30. Finally their pre-failure network 110a is PN{6, 8} again, cf. Figure 7a.

According to yet another embodiment, which is explained with reference to Figures 9 to 11, a network node 2 is configured to maintain local backup information 21a on at least one potential backup node that is capable of replacing a parent node 5 of a further network node 7 in case of failure of said parent node 5, cf. Figure 5, which shows a further streaming tree network 101.

This embodiment of the invention is also denoted as delegation approach, because it proposes to select a specific node 2 to act as delegator node that is configured to receive a request of a further node 7 for a potential backup node, and to forward information regarding said potential backup node to said further node 7.

For example, the delegator node 2 returns on request a backup parent from its sub-tree 111 for a stream recovery on failure. In the context of the present embodiment, a pre-failure network consists of the whole sub-tree 111 of which the delegator node 2 is the root node, cf. Figure 9.

According to a preferred embodiment, the delegator network node 2 is configured to determine a capacity value that defines a node's suitability as a potential backup parent for at least one network node comprised within the sub-tree 111 associated with said delegator network node 2.

According to a further preferred embodiment, the delegator network node 2 is configured to determine said capacity value depending on a number of active child nodes of a respective node, a fan-out of said respective node, and a number of backup children that are already registered for said respective node. This embodiment enables to precisely assess a node's suitability as a backup node.

According to yet another preferred embodiment, said delegator network node 2 is configured to sort a plurality of nodes of said sub-tree 111 according to said capacity value, and to forward information on a potential backup node having the highest capacity value to said further node 7.

According to another embodiment, a backup depth may be defined which is a value that describes a count of layers a delegator node 2 may select backup parents from. As well, the backup depth describes a layer distance to each node's delegator (as seen upwards the tree).

This is impossible for nodes that are located near the tree root, so they have a lower backup depth. Nodes that contact the delegator node 2 for a backup parent may e.g. be located one layer below this backup depth.

According to an embodiment, a node is configured to contact its designated delegator node 2 and to request a backup parent to receive streaming data from upon detecting its parent's failure. Information on the identity and/or further parameters of the delegator node 2 is preferably locally stored to the respective node, e.g. in the form of backup information 21a in analogy to the network node 21 explained with reference to Figure 2a. The local storage of the delegator node 2 enables an efficient response to parent node failures and thus minimizes the time no streaming data can be received by the node.

The delegator node 2 is preferably configured to comprise knowledge about its sub-tree 111 up to the predetermined backup depth, which particularly constitutes a form of pre-failure network the delegator node 2 maintains. Based on its knowledge of the pre-failure network, the delegator node 2 is able to return a proper backup node to a requesting node.

Figure 9 shows two examples of delegator nodes each being assigned a backup depth of 2. Node 0, which is marked by a dashed circle, is configured to operate as a delegator node for all nodes 5, 27, 31, 4, 6, 8, 15, 17, 30 within the dashed rectangle 112. Node 2, which is marked by a dotted circle, is configured to operate as a delegator node for all nodes that are located 2 layers below it. These nodes 7, 10, 20, 33, 34, 38, 35, 36 are framed by a dotted rectangle.

According to a further embodiment, any node 0, 2 configured as a delegator node is required to comprise knowledge about its sub-tree 111 down to the backup depth. The delegator node 0, 2 is not necessarily required to know which of its descendant nodes is a parent or a child of another node. The delegator node 0, 2 is rather only configured to hold a list of nodes which is preferably ordered ascending by a capacity value which is calculated as described below. Said list represents a form of backup information 21a that is to be locally stored to the delegator nodes 0, 2.

According to an embodiment, the capacity value may also be denoted as "backup node capability" and is a parameter that indicates a nodes' capability of taking the role of another node's backup link or backup parent, respectively. Preferably, the capacity value is a positive number which enables an efficient retrieval of suitable backup nodes by the delegator nodes 0, 2 by means of comparison of their capacity values.

Every node of the network 101 may be characterized by three properties that are useful for the calculation of a meaningful capacity value:

- fan-out f,

- number of active children a, and

- number of registered backup children b.

. Using these properties, the capacity value C can be determined using the equation:

$$C = (a + b) / f \qquad (equation\ 1)$$

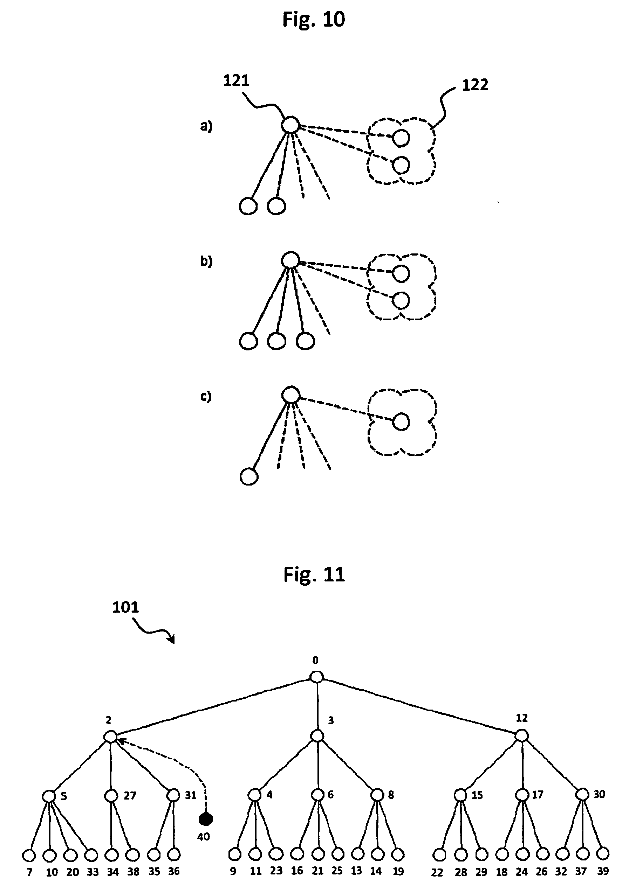

As an example, the fan-out value f of an exemplary node 121 depicted by Figure 10 a) corresponds to the total number of lines that are aligned top-down in Figure 10 a), which indicate a theoretical number of possible child nodes supported by the node 121, no matter if dashed or solid lines. For the configuration according to Figure 10 a), the fan-out value equals 4. This also applies to the further settings according to Figures 10 b) and 10 c).

The number a of active children corresponds to the solid lines connecting two nodes with each other. Referring to Figure 10, a=2 in case of Figure 10 a), a=3 in case of Figure 10 b), and a=1 for Figure 10 c).

Registered backup children are located in the dashed cloud 122 of Figure 10 a).

The node constellations depicted by Figure 10 a) to 10 c) 2 lead to the following capacity values:

Figure 10 a) C = (2 + 2) / 4 = 1

Figure 10 b) C = (3 + 2) / 4 = 5/4

Figure 10 c) C = (1 + 1) / 4 = 1/2

The parent node 122 of Figure 10 a) has two active child nodes and two backup children. Combined with the fan-out of 4, the equation (1) according to the present embodiment results in 1, which indicates the node 122 being exactly filled.

A capacity value above 1 shows that the node might be overstrained in case of one or more failures, as in case of Figure 10 b).

Whenever the capacity value lies between 0 and 1, this indicates that the related node has free capacities and may be well suited as a backup parent, cf. Figure 10 c).

After a delegation node 0, 2 calculated the capacity values of each peer node in its sub tree 111, it preferably sorts the list according to the capacity value. Thus, the delegator node 0, 2 can quickly determine a suitable backup parent node for a requesting node. When a node requests a backup parent, its delegator node 0, 2 e.g. picks the first node from its sorted list and returns it as backup parent. Afterwards, the delegator node eventually reorders the list, because changes have occurred.

Although this is not necessarily the case, in order to enable an efficient backup of the tree topology, according to a further embodiment, each node of the network 101 is configured to be capable of acting as a delegator node. As explained above, that means to assign other nodes from a lower level to backup parents from the pre-failure network 111. The delegator node 0, 2 may also assign itself to a requesting node as a backup parent.

According to a further embodiment, for the purpose of a delegator node 0, 2 always being up-to-date regarding its backup information, i.e. the information on the possible backup nodes and their respective capacity values, the following messages are proposed for signaling purposes. For simplicity and efficient signaling processes, it is particularly preferred that all messages only flow upwards the tree topology 101, if not specified differently.

SubtreeUpdateMessage(Sequence, BackupDepth)

The SubtreeUpdateMessage is used to inform upper tree layers about a new or an altered node. The "Sequence" parameter is a list of nodes and their respective capacity values. The list may comprise information on one or more nodes. Using this parameter structure, every recipient node can determine which node is affected and which other nodes have passed the message upwards. A changed or newly added node is preferably the first in the sequence of nodes. The second parameter "BackupDepth" defines how many tree layers need to be informed about the update.

SubtreeDeleteMessage(Sequence, BackupDepth)

The SubtreeDeleteMessage is used to propagate the absence of a single node to upper tree layers. Again, the "Sequence" parameter contains a list of one or more nodes. "BackupDepth" describes the desired amount of layers the message needs to travel.

RequestDelegationNode(ID, BackupDepth)

This message is used to send a request upwards the tree topology in order to find the delegator node 0, 2. The "ID" parameter contains the originator's id; the "BackupDepth" parameter defines how many layers this message shall travel upwards.

RespondDelegationNode(ID)

The RespondDelegationNode message is a message that may be sent downwards the tree topology. It originates at the found delegator node 0, 2 and is sent to the node that started the RequestDelegationNode message with its own id.

RequestBackup(ID)

This message is used whenever a node has detected its parent's failure and contacts the appropriate delegator node 0, 2 in order to retrieve a backup parent for stream recovery.

AssignBackup(ID)

The AssignBackup message tells the recipient node which node to contact for a stream recovery, i.e. the proposed backup parent. It is sent directly from the delegator node 0, 2 to the originator of the RequestBackup message.
The above defined messages are further explained below in the context of a node joining scenario.
For the following message flow examples, the backup depth is assumed to equal 2. Each node's maximum fan-out value is defined to equal 3.
In reference to Figure 11, node 40 has joined the tree topology 101 and is bound in a parent-child relationship to node 2. Hence, the capacity value C of node 2 has altered and needs to be propagated upwards so that the respective delegator node's backup information can be kept up-to-date. Furthermore, the new node 40 has to gather information on its delegator node.
Thus, node 40 starts requesting its delegator node using the global backup depth of 2. For this purpose, node 40 sends a RequestDelegationNode(40, 2) message to node 2. Node 2, in its function as the message recipient, evaluates for the "BackupDepth" value. Because it is larger than 1, presently "2", node 2 decrements the "BackupDepth" by a value of 1 and passes the message further upwards to node 0, i.e. a RequestDelegationNode(40, 1) is sent from node 2 to node 0. Finally, the RequestDelegationNode(40, 1) reaches node 0, the depth value being 1. Thus, node 0 concludes that it is the delegator node of node 40 and correspondingly notifies node 40 by sending a RespondDelegationNode message with the parameter "0" to node 40: RespondDelegationNode(0).
For node 40, the pre-failure phase has finished at this point, because it is now informed on its delegator node 0, which may be contacted in case of a failure of its parent node 2. And yet, the upper tree layers are still uninformed about the change; hence node 40 initiates a tree update by sending a SubtreeUpdateMessage ({(40,0)}, 2) to its parent node 2.
The exemplary inserted sequence {(40,0)}, which is the first parameter of the SubtreeUpdateMessage, includes all nodes and their appropriate capacity values, the message has travelled. Node 2 receives the SubtreeUpdateMessage and updates its sub-tree information: It adds node 40. It then checks the depth value ("BackupDepth" parameter, cf. the message definitions above), which is "2" in this case. Thus, node 2 concludes that the message has not reached its target depth yet, so node 2 passes the message upwards to node 0 after having added itself to the node sequence.

Additionally, node 2 decrements the depth value from "2" to "1": SubtreeUpdateMessage ({(40,0), (2,0.75)}, 1).

As can be seen from the SubtreeUpdateMessage, the capacity value of node 2 has been entered as 0.75 using a maximum fan-out of 3. When this message reaches node 0, node 0 evaluates the backup depth value which presently equals "1". Hence, node 0 updates its information of all nodes from within the sequence which are part of its sub-tree (regarding the defined backup depth). In this case, node 0 only needs to update node 2. Now, its sub-tree information is up-to-date and thus node 0 can operate as delegator node based on proper sub-tree information.

At this point, the pre-failure phase is finished. Node 40 knows about its pre-failure node, and the sub-tree information of node 0 is completely up-to-date.

In case node 40 detects a failure of its parent node 2, according to one embodiment, it sends a backup request to its delegator node 0: RequestBackup(40).

As already explained above, delegator node 0 is configured to pick the potential backup node best suited to act as backup parent for node 40 from its backup information, i.e. the information on its sub-tree with associated capacity values, and to returns it to the originator, i.e. the requesting node 40: AssignBackup(3).

According to a further embodiment, a node's leaving is handled in basically the same way as the above explained joining is performed. The former parent of the leaving node preferably initiates a SubtreeDeleteMessage, which flows up the tree topoLogy. In the present example, wherein node 40 is to leave the tree topology, node 2 only needs to remove node 40 from its children. Additionally, the former parent node 2 needs to inform the former delegator node 0 of the lost node 40, which is accomplished by transmitting a SubtreeUpdateMessage({(40,0), (2,1)}, 1) from node 2 to node 0.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. Network node (21; 23; 2) for a streaming tree network (101), wherein said node (21; 23) is configured to maintain local backup information (21a) on at least one potential backup node (16) that is capable of replacing a parent node (6; 4) of said network node (21; 23) and/or a parent node (5) of a further network node (7) in case of failure of said parent node (6; 4; 5), **characterized in that** said local backup information comprises information on one or more sibling network nodes (6, 8) of said parent node (4), and **in that** said network node (23) is configured to determine a potential backup node (6) out of said one or more sibling network nodes (6, 8) of its parent node (4) depending on its own node ID and/or on at least one of its own sibling nodes (9, 11).

2. Network node (21) according to claim 1, wherein said local backup information (21a) comprises information on one or more network nodes (16, 21, 25) having the same parent node (6) as the network node (21).

3. Network node (21) according to one of the claims 1 to 2, wherein said local backup information (21a) comprises information on which of said plurality of network nodes (16, 21, 25) is configured to operate as a potential backup node (16) and/or a fan-out and/or a number of free slots, wherein said number of free slots indicates how many child node positions are left at said network node (21) until its fan-out is reached, and/or a sort key of the respective node (16, 21, 25).

4. Network node (21) according to one of the claims 2 to 3, wherein said backup information (21a) is arranged in a load table (21a') which comprises one row per node (16, 21, 25) and a plurality of columns comprising a node ID, information on whether a respective node of said plurality of network nodes (16, 21, 25) is configured to operate as a potential backup node (16) and/or a fan-out and/or a number of free slots, wherein said number of free slots indicates how many child node positions are left at said network node (21) until its fan-out is reached, and/or a sort key.

5. Network node (21) according to one of the claims 2 to 4, wherein said network node (21) is configured to signal a change of said local backup information (21a) to at least one further node.

6. Network node (23) according to claim 1, wherein said network node (23) is configured to sort the network node (23) and its siblings (9, 11) in an ascending or descending order of their node ID to obtain a numbered sequence of nodes (9, 11, 23), and to assign backup parent nodes (6, 8) to the nodes of said sequence (9, 11, 23) depending on a sequence number of the specific node (9, 11, 23) and on an overall number of backup parent nodes (6, 8).

7. Network node (23) according to one of the claims 1 to 6, wherein said network node (23) is configured to receive backup information regarding its own aunt and uncle nodes (6, 8) and/or to signal information regarding its child nodes to further child nodes.

8. Network node (2) according to one of the preceding claims, wherein said network node (2) is configured to receive a request of a further node (7) for a potential backup node, and to forward information regarding said potential backup node to said further node (7).

9. Network node(2) according to claim 8, wherein said network node (2) is configured to determine a capacity value that defines a node's suitability as a potential backup parent for at least one network node comprised within a sub-tree (111) associated with said network node (2).

10. Network node (2) according to claim 9, wherein said network node (2) is configured to determine said capacity value depending on a number of active child nodes of a respective node, a fan-out of said respective node, and a number of backup children that are already registered for said respective node.

11. Network node (2) according to one of the claims 9 to 10, wherein said network node (2) is configured to sort a plurality of nodes of said sub-tree (111) according to said capacity value, and to forward information on a potential backup node having the highest capacity value to said further node (7).

12. Method of operating a network node (21; 23; 2) for a streaming tree network (101), wherein said node (21; 23) maintains local backup information (21a) on at least one potential backup node (16) that is capable of replacing a parent node (6; 4) of said network node (21; 23) and/or a parent node (5) of a further network node (7) in case of failure of said parent node (6; 4; 5), **characterized in that** said local backup information comprises information on one or more sibling network nodes (6, 8) of said parent node (4), and **in that** said network node (23) determines a potential backup node (6) out of said one or more sibling network nodes (6, 8) of its parent node (4) depending on its own node ID and/or on at least one of its own sibling nodes (9, 11).

13. Method according to claim 12, wherein said local backup information (21a) comprises information on one or more network nodes (16, 21, 25) having the same parent node (6) as the network node (6) and/or on one or more sibling network nodes (6, 8) of said parent node (4).

**Patentansprüche**

1. Netzwerkknoten (21; 23; 2) für ein Streaming-Baumnetzwerk (101), wobei der besagte Knoten (21; 23) ausgelegt ist, um lokale Sicherungsinformationen (21a) über mindestens einen potenziellen Sicherungsknoten (16) aufrechtzuerhalten, der fähig ist, einen Vorgängerknoten (6; 4) des besagten Netzwerkknotens (21; 23) und/oder einen Vorgängerknoten (5) eines weiteren Netzwerkknotens (7) im Fall eines Fehlers des besagten Vorgängerknotens (6; 4; 5) zu ersetzen, **dadurch gekennzeichnet, dass** die besagten lokalen Sicherungsinformationen Informationen über einen oder mehrere Geschwisternetzwerkknoten (6, 8) des besagten Vorgängerknotens (4) umfassen, und dadurch, dass der besagte Netzwerkknoten (23) ausgelegt ist, um einen potenziellen Sicherungsknoten (6) aus den besagten einen oder mehreren Geschwisternetzwerkknoten (6, 8) seines Vorgängerknotens (4) abhängig von seiner eigenen Knoten-ID und/oder von mindestens einem seiner eigenen Geschwisterknoten (9, 11) zu bestimmen.

2. Netzwerkknoten (21) nach Anspruch 1, wobei die besagten lokalen Sicherungsinformationen (21a) Informationen über einen oder mehrere Netzwerkknoten (16, 21, 25) mit dem gleichen Vorgängerknoten (6) wie der Netzwerkknoten (21) umfassen.

3. Netzwerkknoten (21) nach einem der Ansprüche 1 bis 2, wobei die besagten lokalen Sicherungsinformationen (21a) Informationen darüber umfassen, welcher von der besagten Vielzahl von Netzwerkknoten (16, 21, 25) ausgelegt ist, um als ein potenzieller Sicherungsknoten (16) und/oder ein Fan-Out und/oder eine Anzahl von freien Schlitzen zu funktionieren, wobei die besagte Anzahl von freien Schlitzen angibt, wie viele Kinderknotenpositionen an dem besagten Netzwerkknoten (21) übrig sind, bis sein Fan-Out erreicht ist, und/oder als ein Sortierschlüssel des jeweiligen Knotens (16, 21, 25).

4. Netzwerkknoten (21) nach einem der Ansprüche 2 bis 3, wobei die besagten Sicherungsinformationen (21 a) in einer Lasttabelle (21a') angeordnet sind, die eine Reihe pro Knoten (16, 21, 25) und eine Vielzahl von Spalten umfasst, die eine Knoten-ID, Informationen darüber umfassen, ob ein jeweiliger Knoten von der besagten Vielzahl von Netzwerkknoten (16, 21, 25) ausgelegt ist, um als ein potenzieller Sicherungsknoten (16) und/oder ein Fan-Out und/oder eine Anzahl von freien Schlitzen zu funktionieren, wobei die besagte Anzahl von freien Schlitzen angibt, wie viele Kinderknotenpositionen an dem besagten Netzwerkknoten (21) übrig sind, bis sein Fan-Out erreicht ist, und/oder als ein Sortierschlüssel.

5. Netzwerkknoten (21) nach einem der Ansprüche 2 bis 4, wobei der besagte Netzwerkknoten (21) ausgelegt ist, um einen Wechsel der besagten lokalen Sicherungsinformationen (21 a) auf mindestens einen weiteren Knoten zu melden.

6. Netzwerkknoten (23) nach Anspruch 1, wobei der besagte Netzwerkknoten (23) ausgelegt ist, um den Netzwerkknoten (23) und seine Geschwister (9, 11) in einer aufsteigenden oder absteigenden Reihenfolge ihrer Knoten-ID zu sortieren, um eine nummerierte Folge von Knoten (9, 11, 23) zu erhalten, und um Sicherungsvorgängerknoten (6, 8) den Knoten der besagten Folge (9, 11, 23) abhängig von einer Folgezahl des spezifischen Knotens (9, 11, 23) und von einer Gesamtzahl von Sicherungsvorgängerknoten (6, 8) zuzuweisen.

7. Netzwerkknoten (23) nach einem der Ansprüche 1 bis 6, wobei der besagte Netzwerkknoten (23) ausgelegt ist, um Sicherungsinformationen betreffend seiner eigenen Tanten- und Onkelknoten (6, 8) zu empfangen und/oder um Informationen betreffend seiner Kinderknoten an weitere Kinderknoten zu melden.

8. Netzwerkknoten (2) nach einem der vorstehenden Ansprüche, wobei der besagte Netzwerkknoten (2) ausgelegt ist, um eine Anfrage eines weiteren Knotens (7) für einen potenziellen Sicherungsknoten zu empfangen, und um Informationen betreffend den besagten potenziellen Sicherungsknoten an den besagten weiteren Knoten (7) weiterzuleiten.

9. Netzwerkknoten (2) nach Anspruch 8, wobei der besagte Netzwerkknoten (2) ausgelegt ist, um einen Kapazitätswert zu bestimmen, der die Eignung eines Knotens als ein potenzieller Sicherungsvorgänger für mindestens einen innerhalb eines Teilbaums (111) enthaltenen Netzwerkknoten in Verbindung mit dem besagten Netzwerkknoten (2) definiert.

10. Netzwerkknoten (2) nach Anspruch 9, wobei der besagte Netzwerkknoten (2) ausgelegt ist, um den besagten Kapazitätswert abhängig von einer Anzahl aktiver Kinderknoten von einem jeweiligen Knoten, einem Fan-Out des besagten jeweiligen Knotens und einer Anzahl von Sicherungskindern, die für den besagten jeweiligen Knoten bereits registriert sind, zu bestimmen.

11. Netzwerkknoten (2) nach einem der Ansprüche 9 bis 10, wobei der besagte Netzwerkknoten (2) ausgelegt ist, um eine Vielzahl von Knoten des besagten Teilbaums (111) gemäß dem besagten Kapazitätswert zu sortieren, und um Informationen über einen potentiellen Sicherungsknoten mit dem höchsten Kapazitätswert an den besagten weiteren Knoten (7) weiterzuleiten.

12. Betriebsverfahren eines Netzwerkknotens (21, 23; 2) für ein Streaming-Baumnetzwerk (101), wobei der besagte Knoten (21; 23) lokale Sicherungsinformationen (21a) über mindestens einen potenziellen Sicherungsknoten (16) aufrechterhält, der fähig ist, einen Vorgängerknoten (6; 4) des besagten Netzwerkknotens (21; 23) und/oder einen Vorgängerknoten (5) eines weiteren Netzwerkknotens (7) im Fall eines Fehlers des besagten Vorgängerknotens (6; 4; 5) zu ersetzen, **dadurch gekennzeichnet, dass** die besagten lokalen Sicherungsinformationen Informationen über einen oder mehrere Geschwisternetzwerkknoten (6, 8) des besagten Vorgängerknotens (4) umfassen, und dadurch, dass der besagte Netzwerkknoten (23) einen potenziellen Sicherungsknoten (6) aus den besagten einen oder mehreren Geschwisternetzwerkknoten (6, 8) seines Vorgängerknotens (4) abhängig von seiner eigenen Knoten-ID und/oder von mindestens einem seiner eigenen Geschwisterknoten (9, 11) bestimmt.

13. Verfahren nach Anspruch 12, wobei die besagten lokalen Sicherungsinformationen (21a) Informationen über einen oder mehrere Netzwerkknoten (16, 21, 25) mit dem gleichen Vorgängerknoten (6) wie der Netzwerkknoten (6) und/oder über einen oder mehrere Geschwisternetzwerkknoten (6, 8) des besagten Vorgängerknotens (4) umfassen.

**Revendications**

1. Noeud de réseau (21 ; 23 ; 2) pour un réseau arborescent de diffusion en continu (101), ledit noeud (21 ; 23) étant configuré pour conserver des informations de secours locales (21a) sur au moins un noeud de secours potentiel (16) qui peut remplacer un noeud parent (6 ; 4) dudit noeud de réseau (21 ; 23) et/ou un noeud parent (5) d'un autre noeud de réseau (7) en cas de défaillance dudit noeud parent (6 ; 4 ; 5), **caractérisé en ce que** lesdites informations de secours locales comprennent des informations sur un ou plusieurs noeuds de réseau frères (6, 8) dudit noeud parent (4), et **en ce que** ledit noeud de réseau (23) est configuré pour déterminer un noeud de secours potentiel (6) parmi ledit ou lesdits noeuds de réseau frères (6, 8) de son noeud parent (4) en fonction de sa propre ID de noeud et/ou d'au moins un de ses propres noeuds frères (9, 11).

2. Noeud de réseau (21) selon la revendication 1, dans lequel lesdites informations de secours locales (21a) comprennent des informations sur un ou plusieurs noeuds de réseau (16, 21, 25) ayant le même noeud parent (6) que le noeud de réseau (21).

3. Noeud de réseau (21) selon l'une des revendications 1 à 2, dans lequel lesdites informations de secours locales (21 a) comprennent des informations sur quel noeud de réseau parmi ladite pluralité de noeuds de réseau (16, 21, 25) est configuré pour fonctionner comme un noeud de secours potentiel (16) et/ou une sortance et/ou un nombre d'espaces libres, dans lequel le nombre d'espaces libres indique combien de positions de noeuds enfants sont laissées au niveau dudit noeud de réseau (21) jusqu'à ce que sa sortance soit atteinte, et/ou une clé de tri du noeud respectif (16, 21, 25).

4. Noeud de réseau (21) selon l'une des revendications 2 à 3 dans lequel lesdites informations de secours (21 a) sont agencées dans une table de charge (21 a') qui comprend une rangée par noeud (16, 21, 25) et une pluralité de colonnes comprenant une ID de noeud, des informations sur le fait qu'un noeud respectif parmi ladite pluralité de noeuds de réseau (16, 21, 25) est ou non configuré pour fonctionner comme un noeud de secours potentiel (16) et/ou une sortance et/ou un nombre d'espaces libres, dans lequel le nombre d'espaces libres indique combien de positions de noeuds enfants sont laissées au niveau dudit noeud de réseau (21) jusqu'à ce que sa sortance soit atteinte et/ou une clé de tri.

5. Noeud de réseau (21) selon l'une des revendications 2 à 4, ledit noeud de réseau (21) étant configuré pour signaler un changement desdites informations de secours locales (21a) à au moins un autre noeud.

6. Noeud de réseau (23) selon la revendication 1, ledit noeud de réseau (23) étant configuré pour trier le noeud de réseau (23) et ses frères (9, 11) dans un ordre ascendant ou descendant de leur ID de noeud pour obtenir une séquence numérotée de noeuds (9, 11, 23), et pour attribuer des noeuds parents de secours (6, 8) aux noeuds de ladite séquence (9, 11, 23) en fonction d'un numéro de séquence du noeud spécifique (9, 11, 23) et d'un nombre global de noeuds parents de secours (6, 8).

7. Noeud de réseau (23) selon l'une des revendications 1 à 6, ledit noeud de réseau (23) étant configuré pour recevoir des informations de secours concernant ses propres noeuds oncles et tantes (6, 8) et/ou pour signaler des informations concernant ses noeuds enfants à d'autres noeuds enfants.

8. Noeud de réseau (2) selon l'une des revendications précédentes, ledit noeud de réseau (2) étant configuré pour recevoir une demande d'un noeud de secours potentiel provenant d'un autre noeud (7), et pour transférer des informations concernant ledit noeud de secours potentiel vers ledit autre noeud (7).

9. Noeud de réseau (2) selon la revendication 9, dans lequel ledit noeud de réseau (2) est configuré pour déterminer une valeur de capacité qui définit l'aptitude d'un noeud en tant que parent de secours potentiel pour au moins un noeud de réseau compris à l'intérieur d'un sous-arbre (111) associé audit noeud de réseau (2).

10. Noeud de réseau (2) selon la revendication 9, dans lequel ledit noeud de réseau (2) est configuré pour déterminer ladite valeur de capacité en fonction d'un nombre de noeuds enfants actifs d'un noeud respectif, d'une sortance dudit noeud respectif, et d'un nombre d'enfants de secours qui sont déjà enregistrés pour ledit noeud respectif.

11. Noeud de réseau (2) selon l'une des revendications 9 à 10, ledit noeud de réseau (2) étant configuré pour trier une pluralité de noeuds dudit sous-arbre (111) conformément à ladite valeur de capacité et pour transférer des informations sur un noeud de secours potentiel présentant la valeur de capacité la plus élevée vers ledit autre noeud (7).

12. Procédé de fonctionnement d'un noeud de réseau (21 ; 23 ; 2) pour un réseau arborescent de diffusion en continu (101), dans lequel ledit noeud (21 ; 23) conserve des informations de secours locales (21 a) sur au moins un noeud de secours potentiel (16) qui peut remplacer un noeud parent (6 ; 4) dudit noeud de réseau (21 ; 23) et/ou un noeud parent (5) d'un autre noeud de réseau (7) en cas de défaillance dudit noeud parent (6 ; 4 ; 5), **caractérisé en ce que** lesdites informations de secours locales comprennent des informations sur un ou plusieurs noeuds de réseau frères (6, 8) dudit noeud parent (4), et **en ce que** ledit noeud de réseau (23) détermine un noeud de secours potentiel (6) parmi ledit ou lesdits noeuds de réseau frères (6, 8) de son noeud parent (4) en fonction de sa propre ID de noeud et/ou d'au moins un de ses propres noeuds frères (9, 11).

13. Procédé selon la revendication 12, dans lequel lesdites informations de secours locales (21a) comprennent des informations sur un ou plusieurs noeuds de réseau (16, 21, 25) présentant le même noeud parent (6) que le noeud de réseau (6) et/ou sur un ou plusieurs noeuds de réseau frères (6, 8) dudit noeud parent (4).

## Fig. 1

100

150

110

9 11 23

16 21 25

13 14 19

120a

120b

120c

## Fig. 2a

21

21a

## Fig. 2b

21a′

| row | node ID | fan-out | free slots | sort key | backup parent |
|-----|---------|---------|------------|----------|---------------|
| 1 | 16 | 3 | 3 | 9 | 0 |
| 2 | 21 | 3 | 3 | 9 | 1 |
| 3 | 25 | 3 | 3 | 9 | 1 |

## Fig. 3

100

9 11 23

21 25·

13 14 19

Fig. 4a

Fig. 4b

Fig. 5

## Fig. 6a

## Fig. 6b

## Fig. 6c

## Fig. 6d

## Fig. 7a

**Fig. 7b**

**Fig. 7c**

## Fig. 7d

100

3

110a

4

6    8    30

9  11  23    16  21  25    13  14  19

## Fig. 8a

3        4        6        8

m4(4,30)

m4(6,30)

m4(8,30)

## Fig. 8b

4        9        11        23

m4(4,30)

m4(4,30)

m4(4,30)

## Fig. 8c

## Fig. 8d

## Fig. 9

# Fig. 10

# Fig. 11

**EP 2 337 277 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030126295 A1